# EUROPEAN PATENT APPLICATION

(11) **EP 1 657 151 A1**
(43) Date of publication of application: **17.05.2006**
(21) Application number: 04771215.3
(22) Date of filing: 04.08.2004
(51) Int. Cl.: B62J 25/00

(54) **FOOT REST FOR MOTORCYCLE AND MOTOCYCLE**

(30) Priority: 18.08.2003 JP 2003294395
(71) Applicant: YAMAHA HATSUDOKI KABUSHIKI KAISHA, Iwata, Shizuoka 438-8501 (JP)
(72) Inventor: NAGAYAMA, Jun, Iwata-shi, Shizuoka 4388501 (JP)
(74) Representative: Grünecker, Kinkeldey, Stockmair & Schwanhäusser Anwaltssozietät
(86) International application number: PCT/JP2004/011180
(87) International publication number: WO 2005/016734

(57) **Abstract**

[Object] To provide motorcycle footrests that provides stable bracing as off-road footrests, and also provides a good ride comfort by absorbing vibrations.

[Means for Resolution] An elastic member 3 is disposed on the upper surface of a footrest body 2. The elastic member 3 constitutes a footrest portion 4 of a footrest 1. The footrest body 2 has at least one bent portion 5 in the cross section. The elastic member 3 is integrally fixed with the footrest body 2 so as to cover the bent portion 5. The footrest portion 4 is constituted substantially only by the elastic member 3. The footrest portion 4 is constructed such that the thickness (t1) of the elastic member 3 at the bent portion 5 of the footrest body 2 is smaller than the thickness (t2) of the elastic member 3 at the other part of the footrest body 2. The elastic member 3 is integrally fixed with the footrest member 2 in such a manner that the elastic member is baked on the footrest body 2.

## Description

### Technical Field

The present invention relates to motorcycle footrests, and in particular, it relates to off-road motorcycle footrest that allows riders to firmly brace themselves and can absorb vibrations.

### Background Art

General on-road motorcycles adopt footrests in which an elastic cylindrical footrest portion (a portion for a rider's foot to place) is put into a footrest bar, thereby reducing the transfer of vibrations to the feet placed on the footrest portion of the footrest. In contrast, for off-road motorcycles, such an elastic footrest portion is not sufficient to hold on a rider's feet, so that steel footrests having unevenness on the upper surfaces are generally used.

However, recent off-road motorcycles increasingly run not only off road but also in common urban areas. In such city riding, conventional off-road footrests transfer the vibration of the body directly, providing uncomfortable riding.

To improve the ride comfort in urban areas, Patent Document 1 proposes a structure of off-road motorcycle footrests that allows riders to firmly brace himself and can absorb vibrations.

Figs. 13 (a) and (b) are a top view of the footrest 100 disclosed in Patent Document 1, and a cross-sectional view taken along line B-B thereof, respectively.

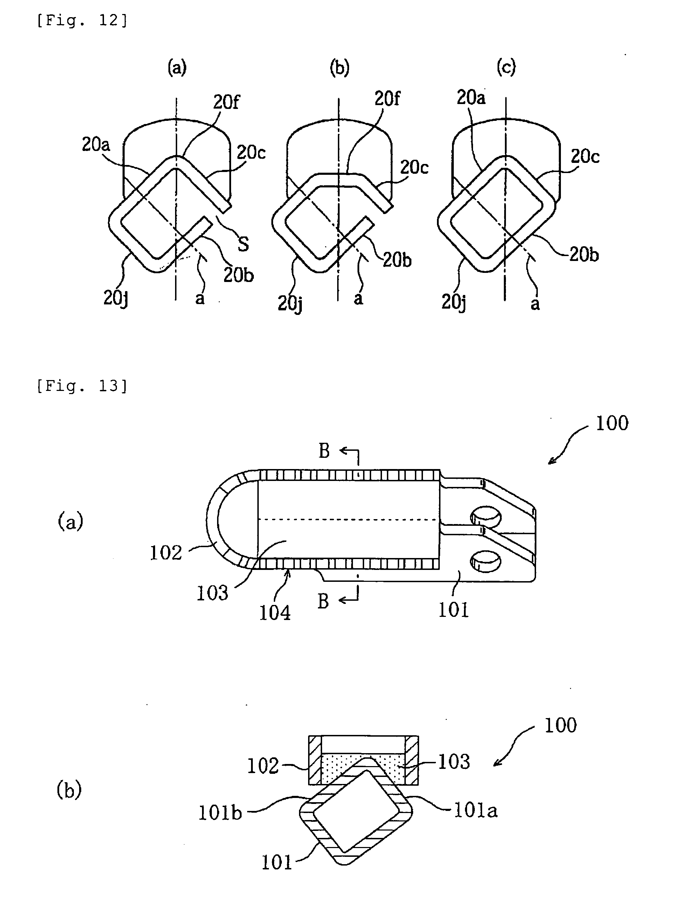

As shown in Fig. 13 (b), a steel-plate column (footrest bar) 101 is rectangular in cross section. The column 101 is disposed obliquely with one edge upside, on which a step plate (footrest portion) 102 that is a U-shaped tie plate is disposed. As shown in Fig. 13(a), the upper surface of the step plate 102 has non-slip roughness 104.

The step plate 102 is disposed such that its lower end is slightly apart from side faces 101a and 101b that sandwich the edge of the column 101. Between the column 101 and the step plate 102, an elastic member 103 is baked to integrally fix the column 101 and the step plate 102 together.

In the footrest 100 of this structure, when a rider applies no force to his feet, the elastic member 103 absorbs vibrations between the column 101 and the step plate 102. On the other hand, when a rider applies force to his feet to brace himself, the elastic member 103 is deformed by the force to bring the lower end of the step plate 102 into close contact with the sides 101a and 101b of the column 101. As a result, the step plate 102 and the column 101 work in a manner substantially similar to a stiff body, allowing the rider to brace himself.
Patent Document 1: JP-UM-A-59-192484

### Disclosure of the Invention

### Problems that the Invention is to Solve

However, in the footrest 100 described in Patent Document 1, the step plate 102 is made of a steel plate. Accordingly, even if the vibrations from the body are absorbed by the elastic member 103, the rider cannot obtain ride comfort as good as that of on-road footrests, as compared with that when placing his feet directly on an elastic footrest portion, because the rider puts his feet directly on the steel-plate step 102.

Since the lower end of the step plate 102 is brought into close contact with the sides 101a and 101b of the column 101, the step plate 102 is provided with stiffness; however, it may sometimes come into close contact with only one of the sides 101a or 101b of the column 101 depending on the direction in which the force of the feet is applied, having the disadvantage that no stable bracing is provided.

The invention has been made in view of such problems. Accordingly, it is an object of the invention to provide off-road motorcycle footrests capable of providing stable bracing and which absorbs vibrations to provide good ride comfort.

### Means for Solving the Problems

Motorcycle footrest according to the invention has an elastic member on the upper surface of the body of the footrest, the elastic member constituting a footrest portion. The footrest body has at least one bent portion in the cross section; the elastic member is integrated with the footrest body so as to cover the bent portion; and the footrest portion is constituted substantially only by the elastic member.

According to a preferred embodiment, the footrest portion is constructed such that the thickness of the elastic member at the bent portion of the footrest body is smaller than that at the other part of the footrest body.

It is preferable that the elastic member be integrated with the footrest member in such a manner that the elastic member is baked on the footrest body.

It is preferable that the footrest body has a U-shape cross section having two pent portions; and the elastic member be integrated with the footrest body so as to cover one of the bent portion of the U-shape.

According to a preferred embodiment, the surface of the elastic member has vertical grooves extending along the length of the footrest body; and the vertical grooves are disposed in positions shifted longitudinally from the bent portion of the footrest body.

It is preferable that the footrest be used in off-road motorcycles.

The motorcycle according to the invention is a motorcycle in which the above-described motorcycle footrests are mounted to the body frame, wherein the bent portion of the footrest body is mounted to the body frame so as to be located in the uppermost position.

The motorcycle footrest according to an embodiment of the invention is constructed such that a footrest body rotatably mounted to a body frame with a support pin slanting upward to the front includes: at least front and rear vertical walls supported by the support pin; and a lateral wall extending from the upper end of the front or rear vertical wall to the rear or front vertical wall; and an elastic footrest member having a footrest surface extending substantially horizontally along the width of the motorcycle is integrally fixed to the footrest body so as to cover a corner extending substantially horizontally along the width of the motorcycle between the front or rear vertical wall and the lateral wall.

It is preferable that the footrest body has a U-shape cross section, and the lateral wall connect the upper ends of the front and rear vertical walls together.

The lower ends of the front and rear vertical walls may be connected together by a bottom wall.

It is preferable that heightwise thickness of the footrest portion at the corner of the footrest body be smaller than that at the front and rear.

According to an embodiment, the footrest surface of the footrest portion is partitioned by grooves of a specified depth into multiple block.

### Advantages of the Invention

Motorcycle footrests according to the invention are each constructed such that a footrest portion made of an elastic member is integrally fixed with a footrest body so as to cover a bent portion of the footrest portion; and the footrest portion is constituted substantially only by the elastic member. Accordingly, it provides a good ride because the elastic member absorbs the vibration of the body frame when a rider applies no force to his feet.

The vertical thickness of the elastic member at the bent portion of the footrest body is smaller than that at the other part of the footrest body. Accordingly, when the rider braces his feet to apply a load onto the footrest portion, the load is applied directly to the footrest body because the elastic member at the bent portion is small in thickness, providing bracing as large as the stiffness of the footrest body.

Furthermore, since the thickness of the elastic member increases gradually from the bent portion to the other part, the state of bracing does not change even if the direction of force changes, providing stable bracing.

In addition, the elastic member is integrally fixed with the footrest member in such a manner that the elastic member is baked on the footrest body, so that the footrests can be manufactured at low cost by a simple structure.

The foregoing advantages are provided particularly for off-road motorcycle footrests. For city riding, it increases riding comfort by absorbing the vibration of the body frame; for off-road riding, it exhibits the original function of bracing.

The grooves on the surface of the elastic member offers an antislipping effect. However, the footrest according to the invention has only the lateral grooves (grooves extending along the width of the footrest body) at the bent portion and has no vertical grooves (grooves extending along the length of the footrest body). Accordingly, the substantial thickness of the elastic member in the vicinity of the bent portion is maintained, so that the antislipping effect can be offered without losing the advantages described above.

### Brief Description of the Drawings

[Fig. 1] Fig. 1 is a diagram showing the structure of a motorcycle footrest 1 according to the invention.
[Fig. 2] Fig. 2 is a plan view of the footrest 1 according to an embodiment of the invention.
[Fig. 3] Fig. 3 is a side view of a motorcycle 31 in which a footrest 15 according to an embodiment of the invention is disposed.
[Fig. 4] Fig. 4 is a side view showing how the footrest 15 according to the embodiment of the invention is mounted to the body frame.
[Fig. 5] Fig. 5 is a plan view of the footrest 15 according to the embodiment of the invention.
[Fig. 6] Fig. 6 is a back view of the footrest 15 according to the embodiment of the invention.
[Fig. 7] Fig. 7 is a diagram of the footrest 15 according to the embodiment of the invention, viewed at right angles to the lateral wall thereof.
[Fig. 8] Fig. 8 is a side view of the footrests 15 according to the embodiment of the invention.
[Fig. 9] Fig. 9 is a cross-sectional view of the footrest 15 taken along line IX-IX of Fig. 6.
[Fig. 10] Fig. 10 is a cross-sectional view of the footrest 15, taken along line X-X of Fig. 6.
[Fig. 11] Fig. 11 is a diagram of a modification of a footrest body 20 according to the invention.
[Fig. 12] Fig. 12 is a diagram of another modification of the footrest body 20 according to the invention.
[Fig. 13] Fig. 13 is a diagram showing the structure of a conventional footrest 15.

### Description of Reference Numerals

- 1, 15:: footrest
- 2, 20:: footrest body
- 3:: elastic member
- 4:: footrest portion
- 5:: bent portion
- 6b:: lateral groove
- 6a:: vertical groove
- 20a:: front vertical wall
- 20b:: rear vertical wall
- 20c:: lateral wall
- 20f:: corner
- 21a:: footrest surface
- 21d:: groove

### Best Mode for Carrying Out the Invention

The inventor of the application concerned examined the feasibility of footrests that absorbs the vibration of a body frame during on-road riding and provides stable bracing during off-road riding with a simple structure. As a result, the inventor obtained the following findings:

General off-road footrests are often mounted to a body frame such that the bent portion of the footrest body is located at the uppermost position so as to prevent the footrest from coming into contact with the ground when the body frame banks. However, for city riding, it is preferable that the upper surface of the footrest portion is parallel to the ground for the feet to place with stability.

The inventor has therefore focused attention on that when an elastic member that is integrally fixed to a footrest body so as to cover the bent portion of the footrest body is used as a footrest portion, and the upper surface of which is substantially flattened, the vertical thickness of the elastic member at the bent portion becomes smaller than that of the other part as a necessary consequence.

Specifically speaking, the inventor has found that when the thickness of the elastic member at the bent portion is made small so that feet's force applied to the footrest is directly loaded on the footrest body, the structure provide bracing substantially similar to that of the stiff footrest body, resulting in the idea of the invention.

Motorcycle footrests according to an embodiment of the invention will be described hereinbelow with reference to the drawings.

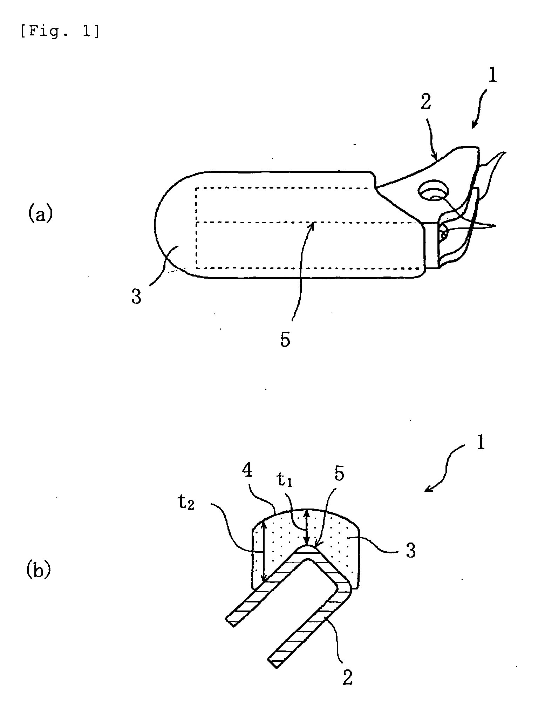

Figs. 1(a) and 1(b) show the schematic structure of a footrest 1 according to the embodiment, wherein Fig. 1(a) is a plan view of the footrest 1, and Fig. 1(b) is a side view thereof. An elastic member 3 is formed on the upper surface of a footrest body 2. The elastic member 3 constitutes a footrest portion 4 (a portion for a rider to place his feet) of the footrest 1. The cross section of the footrest body 2 has at least one bent portion 5. The elastic member 3 is integrally fixed with the footrest body 2 so as to cover the bent portion 5. The footrest portion 4 is substantially constituted by only the elastic member 3.

As shown in Fig. 1(b), the footrest portion 4 is constructed such that the vertical thickness (t1) of the elastic member 3 at the bent portion 5 of the footrest body 2 is smaller than the thicknesses (t2) of the elastic member 3 at the other part of the footrest body 2.

The elastic member 3 is integrally fixed with the footrest body 2 by being baked to the footrest body 2. Specifically, the footrest body 2 is put in a die of a shape corresponding to the footrest portion 4, and an elastic member (e.g., rubber) is poured into the space formed by the footrest body 2 and the die and baked. Thus, the formation of the footrest portion 4 and the fixation to the footrest body 2 can be made at the same time.

According to the embodiment, the footrest body 2 has a U-shape cross section having two bent portions; and the elastic member 3 is integrally fixed with the footrest body 2 so as to cover one bent portion 5 of the U-shape.

With the above structure, the footrest portion 4 made of the elastic member 3 is integrally fixed with the footrest body 2 so as to cover the bent portion 5 of the footrest body 2, and the footrest portion 4 is substantially constituted only by the elastic member 3. Accordingly, when a rider applies no force to his feet, the elastic member 3 can absorb the vibration of the body frame, providing good ride.

The elastic member 3 at the bent portion 5 of the footrest body 2 is smaller in thickness than the elastic member 3 at the other part of the footrest body 2. Accordingly, when a rider applies feet load to the footrest portion, the load is directly applied to the footrest body 2 via the elastic member 3. This provides bracing substantially similar to the stiffness of the footrest body 2.

Furthermore, since the thickness of the elastic member 3 increases gradually from the bent portion 5 to the other part, the degree of bracing his feet does not change suddenly even if the direction of the force changes. This provides stable bracing.

In addition, the elastic member 3 is integrally fixed with the footrest body 2 by being baked to the footrest body 2. Thus, the footrest 1 can be manufactured at low cost by a simple process.

The foregoing advantages are provided particularly for off-road motorcycle footrests. For city riding, it increases riding comfort by absorbing the vibration of the body frame; for off-road riding, it exhibits the original function of bracing.

Although the example of Fig. 1 shows that the elastic member 3 is integrally fixed with the footrest body 2 so as to cover only one bent portion 5 of the U-shape, the elastic member 3 may cover both of the bent portions, e.g., when it is necessary that the area of the footrest portion be large.

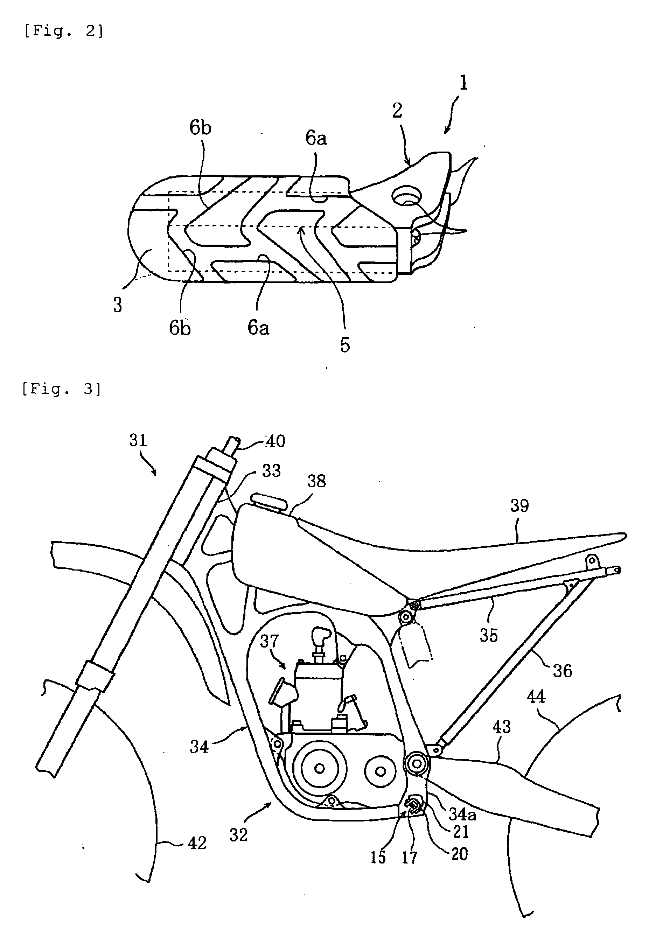

Referring next to Fig. 2, a motorcycle footrest 1 according to another embodiment of the invention will be described.

As shown in Fig. 2, the surface of the elastic member 3 has vertical grooves 6a extending along the length of the footrest body 2. The vertical grooves 6a are provided in positions shifted longitudinally from the bent portion 5 of the footrest body 2.

The grooves on the surface of the elastic member 3 offers an antislipping effect. In addition, the vertical grooves 6a extending along the length of the footrest body 2 are disposed in positions shifted longitudinally from the bent portion 5 of the footrest body 2. Accordingly, the thickness of the elastic member 3 in the vicinity of the bent portion 5 is maintained, so that the antislipping effect can be offered without losing the advantages described with reference to Fig. 1.

Providing also the lateral grooves 6b substantially along the width direction of the footrest body 2 increases the foot antislipping effect. In this case, even if the lateral grooves 6b are disposed in the vicinity of the bent portion 5 of the footrest body 2, the substantial thickness of the elastic member 3 in the vicinity of the bent portion 5 can be maintained. Thus, the advantages described with reference to Fig. 1 are not lost.

The structure of the motorcycle footrests according to the embodiment will be described in detail with reference to Figs. 3 to 12.

Referring to Fig. 3, a body frame 32 of an off-road motorcycle 31 has a structure in which a seat rail 35 is connected to a main frame 34 that extends from a head pipe 33 so as to expand vertically toward the lower part of the motorcycle; and the seat rail 35 and the main frame 34 are joined together by a seat stay 36.

An engine 37 is mounted inside the main frame 34, on which a fuel tank 38 is disposed. A seat 39 is mounted behind the fuel tank 38. A steering handle 40 and a front wheel 42 are disposed at the upper end and the lower end of a front fork that is supported by the head pipe 33 so as to rotate laterally, respectively. A rear wheel 44 is disposed at the rear end of a rear arm 43 that is supported by the main frame 34 so as to pivot vertically.

Footrests 15 are disposed at the right and left lower rear corners 34a of the main frame 34 and below the seat 39, respectively. The right and left footrests 15 are each supported by a bracket (not shown), joined to the lower rear corner 34a with bolts, by a support pin 17 disposed so as to slant upward to the front. Thus, the footrests 15 are supported rotatably between the position of use that extends substantially horizontally and outward along the width and the position of retraction that rises obliquely to the rear.

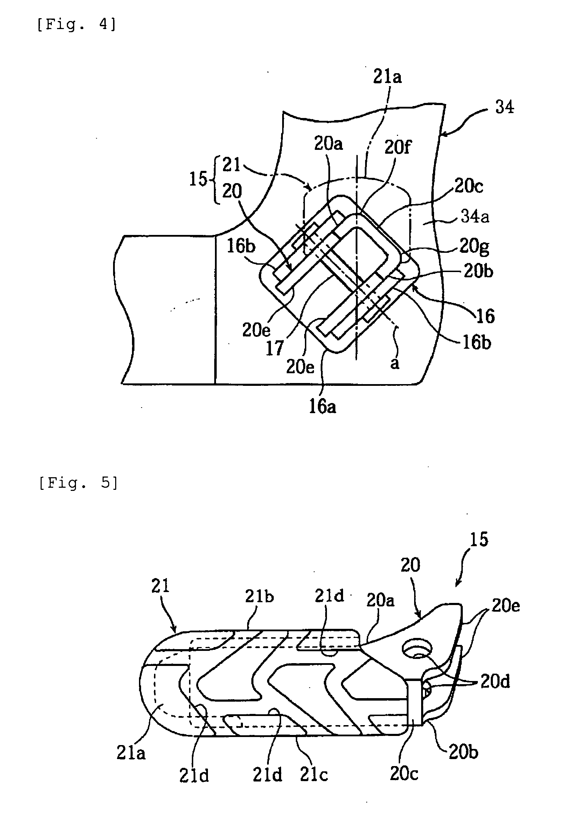

Referring to Fig. 4, how the footrests 15 are mounted to the main frame 34 will be described. As shown in Fig. 4, the bracket 16 is composed of a base plate 16a and front and rear support walls 16b and 16b integrated into one by welding. The support pin 17 is mounted between the front and rear support walls 16b so as to slant substantially at 45 degrees along its axis a. Each footrest 15 includes a metal-plate footrest body 20 and an elastic footrest member 21 having a footrest surface 21a extending substantially horizontally along the width of the vehicle.

The footrest body 20 has a U-shape cross section including a front vertical wall 20a and a rear vertical wall 20b that are supported by the support pin 17 and a lateral wall 20c that connects the upper ends of the front vertical wall 20a and the rear vertical wall 20b together. The footrest body 20 is slanted so that a corner 20f between the front vertical wall 20a and the lateral wall 20c extends substantially horizontally and in the highest position.

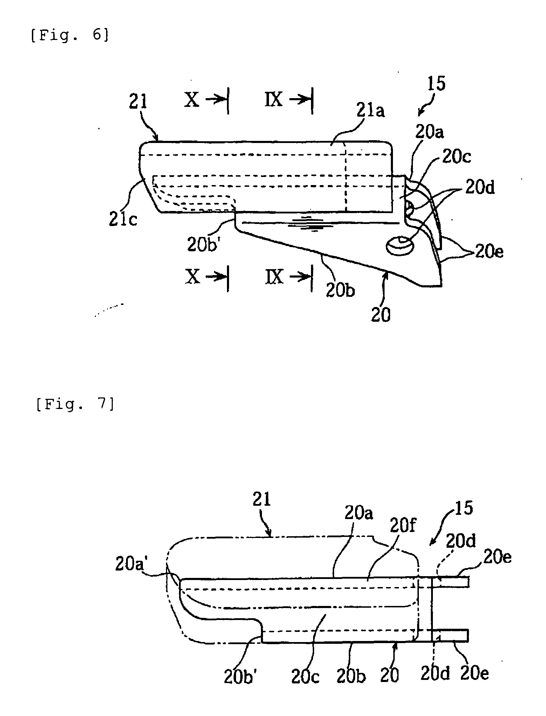

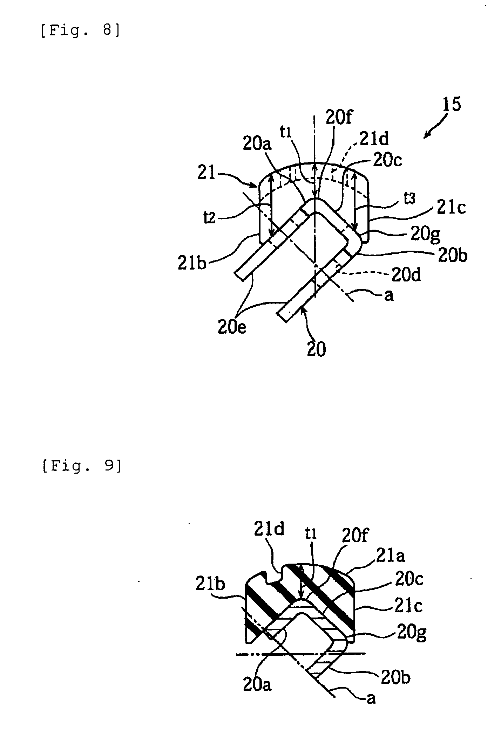

Referring then to Figs. 5 to 7, the structure of the footrests 15 will be described. Fig. 5 is a plan view of the footrest 15; Fig. 6 is a back view of the footrest 15; and Fig. 7 is a diagram of the footrest 15 viewed at right angles to the lateral wall of the footrest 15.

The rear vertical wall 20b has a substantially triangular shape that is smaller in height at the outer side along the width of the motorcycle as viewed from the back, whose outer end 20b' is located in the middle of the lateral wall 20c. This prevents the footrest body 20 from coming contact with the ground when the motorcycle banks.

The front vertical wall 20a extends outward from the base of the substantially triangular shape that is smaller in height at the outer side along the width of the vehicle as viewed from the front, whose outer end 20a' is located at the end of the lateral wall 20c. This ensures stiffness to support the lateral wall 20c.

Also, support-pin through holes 20d and 20d are provided at the inner bases of the front and rear vertical walls 20a and 20b, respectively. Stoppers 20e and 20e extend from the inner bases. The stoppers 20e and 20e are in contact with the base plate 16a of the bracket 16 to stop the footrests 15 in the use position.

The footrest member 21 is made of rubber, and is integrally fixed with the front corner 20f between the front and rear vertical walls 20a and 20b so as to cover the front part. This is manufactured by such a simple process as to place the footrest body 20 in a die (not shown) of a shape corresponding to the footrest member 21 and pour a rubber material into the space defined by the footrest body 20 and the die, thereby forming the footrest member 21 and fixing it to the footrest body 20 at the same time.

The front 21b of the footrest member 21 projects slightly forward from the front edge of the front vertical wall 20a. The rear end surface 21c is located at an approximate corner 20g between the lateral wall 20c and the rear vertical wall 20b.

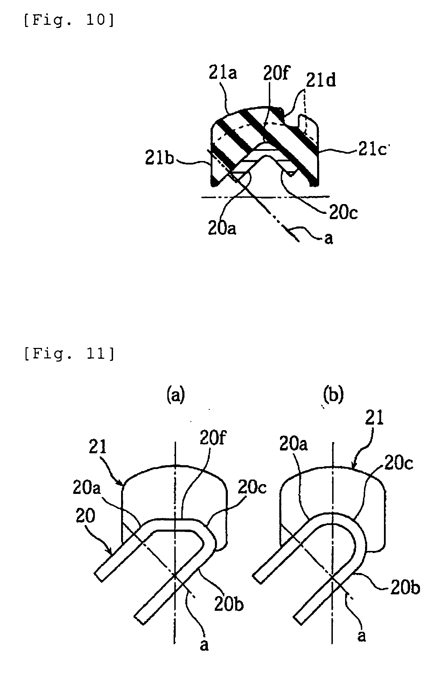

Referring to then Figs. 8 to 10, the structure of the footrest member 21 of the footrest 15 will be described. Fig. 8 is a side view of the footrest 15; and Figs. 9 and 10 are cross-sectional views of the footrest 15 taken along line IX-IX, and line X-X of the footrest 15 shown in Fig. 6, respectively.

The height thickness t1 of the footrest member 21 at the front corner 20f is smaller than the thicknesses t2 and t3 at the front and rear. The footrest surface 21a of the footrest member 21 has grooves 21d having a specified depth and an appropriate shape, by which the footrest surface 21a of the footrest member 21 is partitioned into multiple blocks. The depth and width of the grooves 21d are set to about 5 mm.

The footrests 15 of this embodiment is constructed such that the footrest member 21 having the footrest surface 21a extending substantially horizontally along the width direction of the motorcycle is integrally fixed with the corner 20f between the front vertical wall 20a and the lateral wall 20c of the footrest body 20 that is rotatably supported by the support pin 17 disposed so as slant to the front substantially at 45 degrees. Thus the footrest member 21 can be formed and fixed to the footrest body 20 at the same time by such a simple process as to pour a rubber material with the footrest body 20 placed in the die of a shape corresponding to the footrest member 21. This simplifies the manufacturing process, thus reducing the cost.

Since the footrest body 20 is shaped in a U-like configuration in cross section in which the front and rear vertical walls 20a and 20b are joined together by the lateral wall 20c, the stiffness of the footrest body 20 can be increased.

The heightwise thickness t1 of the footrest member 21 at the corner 20f is smaller than the thicknesses t2 and t3 at the front and rear. Accordingly, a load at jumping, for example, can be imposed on the footrest body 20 via the footrest member 21, providing a stable riding posture.

For normal riding, the footrest member 21 absorbs vibrations from a road surface, improving ride comfort.

The footrest member 21 has grooves 21d having a specified depth, by which the footrest surface 21a is partitioned into multiple blocks. This ensures the stiffness of the footrest member 21 itself while improving the ability of absorbing the vibrations from a road surface, and preventing a rider's feet from slipping.

While the invention has been described in its preferred form, it is to be understood that the invention is not limited by the description and various modifications are possible. For example, while, in the embodiment, the footrest body 20 is shaped in a U-like configuration in cross section in which the front and rear vertical walls 20a and 20b are joined together by the lateral wall 20c, the footrest body may be constructed such that the corner 20f between the front vertical wall 20a and the lateral wall 20c is flattened so as to be substantially parallel to the footrest surface 21a, as shown in Fig. 11 (a), or alternatively, the lateral wall 20c may be curved in substantially semicircular shape, as shown in Fig. 11(b). Furthermore, the lower ends of the front and rear vertical walls 20a and 20b may be joined together by a bottom wall 20j, as shown in Figs. 12(a) to (c). Fig. 12(a) shows an example in which the front and rear vertical walls 20a and 20b are joined together by the bottom wall 20j, and a space S is provided between the rear vertical wall 20b and the lateral wall 20c. Fig. 12(b) shows an example in which the front and rear vertical walls 20a and 20b are joined together by the bottom wall 20j , a space S is provided between the rear vertical wall 20b and the lateral wall 20c, and the corner 20f between the front vertical wall 20a and the lateral wall 20c is formed in flat shape so as to be approximately parallel to the footrest surface 21a. Fig. 12 (c) shows an example in which the front vertical wall 20a, the lateral wall 20c, the rear vertical wall 20b, and the bottom wall 20j are integrated to form a square ring shape in cross section.

### Industrial Applicability

The invention can provide off-road motorcycle footrests capable of providing stable bracing and which can absorb vibrations to provide good ride comfort.

## Claims

1. Motorcycle footrests each having an elastic member on an upper surface of the body of the footrest, the elastic member constituting a footrest portion, wherein
the footrest body has at least one bent portion in the cross section;
the elastic member is integrally fixed with the footrest body so as to cover the bent portion; and
the footrest portion is constituted substantially only by the elastic member.

2. The motorcycle footrests according to Claim 1, wherein the footrest portion is constructed such that the thickness of the elastic member at a bent portion of the footrest body is smaller than that at the other part of the footrest body.

3. The motorcycle footrests according to Claim 1, wherein the elastic member is integrally fixed with the footrest body in such a manner that the elastic member is baked on the footrest body.

4. The motorcycle footrests according to Claim 1, wherein:
the footrest body has a U-shape cross section having two pent portions; and
the elastic member is integrally fixed with the footrest body so as to cover the bent portion of the U-shape.

5. The motorcycle footrests according to Claim 1, wherein:
the surface of the elastic member has vertical grooves extending along the length direction of the footrest body; and
the vertical grooves are disposed in positions shifted longitudinally from the bent portion of the footrest body.

6. The motorcycle footrests according to any one of Claims 1 to 5, wherein the footrest is used in off-road motorcycles.

7. A motorcycle in which the motorcycle footrests according to one of Claims 1 to 5 are mounted to the body frame, wherein
the bent portion of the footrest body is mounted to the body frame so as to be located in the uppermost position.
